# EUROPEAN PATENT APPLICATION

(11) **EP 4 553 141 A1**
(43) Date of publication of application: **14.05.2025**
(21) Application number: 24210940.3
(22) Date of filing: 05.11.2024
(51) Int. Cl.: C12G 1/06

(54) **SUPPORT CONTAINER FOR BOTTLES**

(30) Priority: 08.11.2023 IT 202300023484
(71) Applicant: Primec S.r.l., 43122 Parma (PR) (IT)
(72) Inventor: FICAI, Pietrandrea Gabriele, 43121 Parma (PR) (IT)
(74) Representative: Caldon, Giuliano

(57) **Abstract**

Support container for bottles, in particular for the remuage of sparkling wines, which comprises a support framework (2) provided with a containment volume (8) adapted to contain multiple bottles (100). The support framework (2) comprises multiple first groups (12) of base supports (13, 14), which are placed on a base side (3) of the support framework (2) itself and are each adapted to support, a row of bottles (100). Each first group (12) comprises a first base support (13) adapted to receive, in abutment, the enlarged body (101) of the bottles (100) of the corresponding row, and a second base support (14) adapted to receive, in abutment, the neck (102) of the bottles (100) of the corresponding row. The support framework (2) also comprises, for each first group (12), a third base support (15), which is adapted to receive, in abutment, the enlarged body (101) of bottles (100) of the row following that supported by the first and second base support (13, 14) of the first group (12).

## Description

### Field of application

The present invention refers to a support container for bottles, in particular for the remuage of sparkling wines, according to the preamble of the independent claim 1.

The present support container is inserted in the field of wine production, in particular sparkling wine production.

More in detail, the present support container is intended to be employed in the sparkling wine production process in order to store, at its interior, a high number of bottles during the remuage step adapted to remove the deposits of the spent yeasts contained in the bottles themselves.

### State of the art

As is known, in summary, the sparkling wine production process provides for adding, to a mixture of base wines, a sugar solution admixed with suitable yeasts which, following fermentation, generates carbon dioxide in order to render the wine sparkling.

There are different techniques for attaining the sparkling wine production process, such as traditional method, the ancestral method, the Charmat method.

In particular, the so-called traditional method provides for carrying out multiple steps, including a step of assembly of base wines, in which multiple base wines are mixed together, obtaining a so-called cuvee. A step of adding the liqueur de tirage is then provided, in which a solution is added to the cuv6e containing sugars, yeasts and mineral salts in order to attain the fermentation process which will lead to the development of alcohol and carbon dioxide.

Then, a bottling step is provided for, in which the cuv6e admixed with the liqueur de tirage is bottled in dark-colored bottles that are closed with a crown cap.

Then, a step of refermentation, in which the bottles are stored in horizontal position in controlled temperature environments for a period typically ranging between eighteen months and many years, during which the sugars are transformed from the yeasts, generating alcohol and carbon dioxide. At the end of such step, the so-called remuage step is carried out, which has the object of separating the residues of the yeasts from the wine, so as to clarify the latter. Such step provides for executing a slow rotation of the bottles from the horizontal position up to a nearly vertical position with the bottle overturned, such that the residues of the yeasts are accumulated on the cap of the bottle. Subsequently, a disgorgement step is provided, in which the residues of the yeasts are removed from the bottle. In particular, in such step, the wine at the neck of the bottle is frozen (with a cooling bath), then the crown cap is removed by also removing yeast residues that have accumulated thereon.

Then, a metering step is provided in which the liquid in the bottles is filled with a fill liquid termed "liqueur d'expedition", and then a step of capping and packaging the bottles.

In particular, the aforesaid remuage step, in which the bottles are overturned in order to separate the residues of spent yeast, can be executed in a manual manner or in an automated manner.

In particular, in the manual manner, the bottles are manually placed on conventional wood easels termed "pupitres" and are moved by the operators from an initial tilt of about 30° up to a nearly vertical position.

The manual remuage, even if they have shown to be conventionally effective in the separation of the spent yeasts, requires the use of a great number of operators, above all for producing sparkling wines on a large scale.

The remuage with automated systems is actuated with so-called gyropalette machines, which are capable of rotating support containers (termed baskets or cages) containing hundreds of bottles, reproducing, in an automated manner, the movements that are carried out in the manual remuage, therefore requiring less manpower.

More in detail, in order to load the bottles into the gyropalettes, these are placed within the suitable support containers, placed in superimposed series of rows.

In particular such support containers have box-like shape with six sides, including a base side which, during loading of the bottles, is abutting horizontally on the ground. The basket is extended between a head side, closed by a head wall provided with a series of horizontal positioning grooves, and a bottom side which usually is open during loading of the bottles. The support container is closed at the flanks by two lateral walls connected to the head wall.

The bottles are loaded in the support container by initially placing them in multiple rows of bottles abutted against the base wall and placed in succession starting from the head wall. In particular, a first row of bottles is placed along the head wall, with the head of the bottles placed within a lower guide seat of the head wall. A subsequent row of bottles is then placed, in which the head of the bottles of the latter row is inserted in the hollow bottom of the bottles of the first row. Subsequent rows of bottles are then added on the base wall up to reaching the bottom side of the support container. Then, the operation is repeated, placing analogous rows of bottles above those placed on the base wall, up to reaching the upper side of the support container. Once the support container is filled, the upper side and bottom side of the latter are closed with suitable grills and the support container can be loaded on the gyropalettes. An example of a support container of the abovementioned type is described in the document FR 3049286 A1.

The placement of the bottles within the support container, even if it confers a good stability of the bottles at its interior, also during the rotation of the support container during the remuage, results particularly bulky and does not allow optimizing the number of bottles that can be placed within each support container.

Also known is a different system for loading bottles on gyropalettes, described for example in the patent application EP 0324699 A1. Such system provides for the arrangement of a base pallet, on which a first rank of bottles are vertically placed. On such first rank, a separator panel is placed (obtained for example with a thickened plastic sheet) provided with a plurality of openings, in which the corresponding heads of the bottles are inserted. On such separator panel, a second rank of bottles is placed, in which the bottom of each bottle is placed in the space between the heads of four bottles of the lower first rank. On such second rank, second separator panel is placed in a manner analogous to that of the first rank of bottles. Such operation is repeated up to obtaining a pack formed by multiple ranks of superimposed bottles. The different ranks of bottles are treated by means of strapping, i.e. with multiple plastic straps placed to enclose the ranks of bottles, from the lower rank to the upper rank, thus retaining the ranks packed on each other.

Also this solution of known type does not lack drawbacks.

First of all, such system is complex to attain, since - from a practical standpoint - the operation of placing a separator panel on each rank of bottles is particularly complex for the operator, who must make the head of each bottle enter into a corresponding hole of the separator panel.

In addition, such system of known type necessarily require placing the bottles vertically in order to pack them together in multiple levels, making it more difficult to store the bottles horizontal, as provided for by the remuage.

In addition, the system necessarily requires having to terminate one rank of bottles before starting the next rank due to the presence of the separator panels, having little flexibility during formation of the packs of bottles.

In addition, in the step of storing packs of bottles, these cannot be placed on top of each other for more than two or at most three levels, since the structural strength of the packs is mainly given by the bottles that form the latter.

### Presentation of the invention

In this situation, the problem underlying the present invention is that of overcoming drawbacks manifested by the art known up to now, by providing a support container for bottles, in particular for the remuage of sparkling wines, which allows loading, in a simple and quick manner, a high number of bottles.

Further object of the present invention is to provide a support container for bottles, which allows loading the bottles in an easy and flexible manner, also in horizontal position.

Further object of the present invention is to provide a support container for bottles, which allows stably housing the bottles at its interior in all the operative conditions of bottle storage and treatment, in particular during the remuage step.

Further object of the present invention is to provide a support container for bottles, which is structurally simple.

Further object of the present invention is to provide a support container for bottles, which is structurally solid and reliable to use.

### Brief description of the drawings

The technical characteristics of the invention, according to the aforesaid objects, can be clearly found in the contents of the below-reported claims and the advantages thereof will be more evident in the following detailed description, made with reference to the enclosed drawings, which represent a merely exemplifying and non-limiting embodiment of the invention, in which:
- figure 1 shows a perspective view of the support container, object of the present invention, with the bottles loaded;

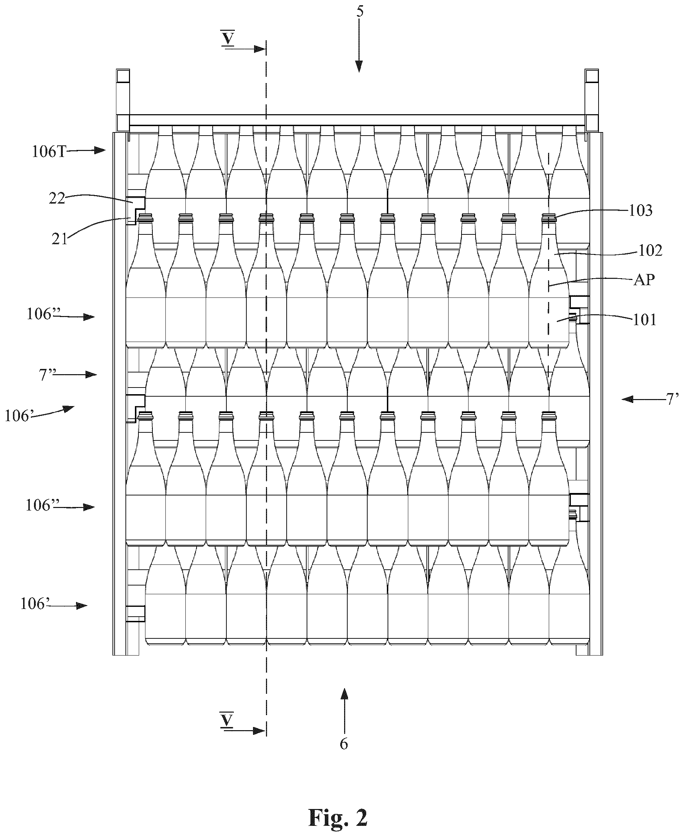

- figures 2 and 3 respectively show a top and bottom plan view of the support container of figure 1;
- figure 4 shows a side view of the support container of figure 1;
- figure 5 shows a sectional view of the support container of figure 2 according to the trace V-V of figure 2 itself;
- figure 6 shows a sectional view of the support container of figure 4 according to the trace VI-VI of figure 4 itself;
- figure 7 shows a detail of the present support container relative to base supports;
- figure 8 shows a detail of the present support container relative to lateral supports;
- figure 9 shows a perspective view of the present support container with the bottles;
- figure 10 shows a rank of bottles loaded in the support container.

### Detailed description of a preferred embodiment

With reference to the enclosed drawings, reference number 1 overall indicates one embodiment of the support container for bottles, object of the present invention.

The present support container 1 is intended to be advantageously used in the process of producing sparkling wines, specifically in the so-called remuage step, in particular with automated mode.

More in detail, the support container 1 & is intended to be filled with multiple bottles 100 and then loaded (in a per se conventional manner) on automated machines (termed "gyropalettes") which are arranged for rotating the support container 1 and, thus, the bottles 100, according to the positions and the times provided for by the remuage.

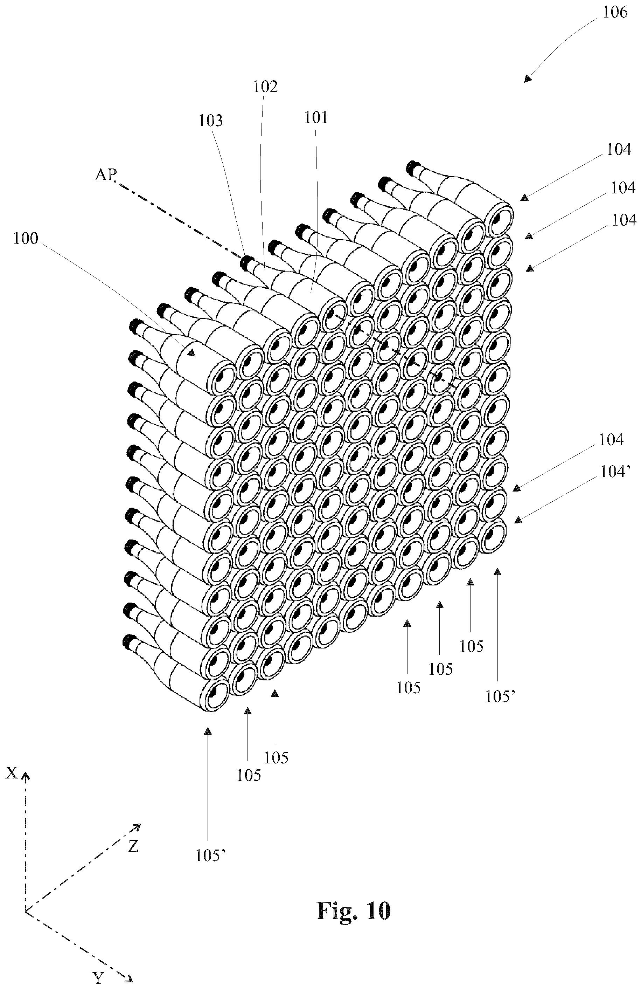

In a per se conventional manner, each bottle 100 comprises (as is visible for example in figure 10) an enlarged body 101 and a narrowed neck 102 extended, along a main axis AP of the bottle 100 itself, from the enlarged body 101 up to one head 103 thereof. In particular, the head 103 of the neck 101 is provided with a mouth which, during the remuage step, is closed by a crown cap (not illustrated in the enclosed figures).

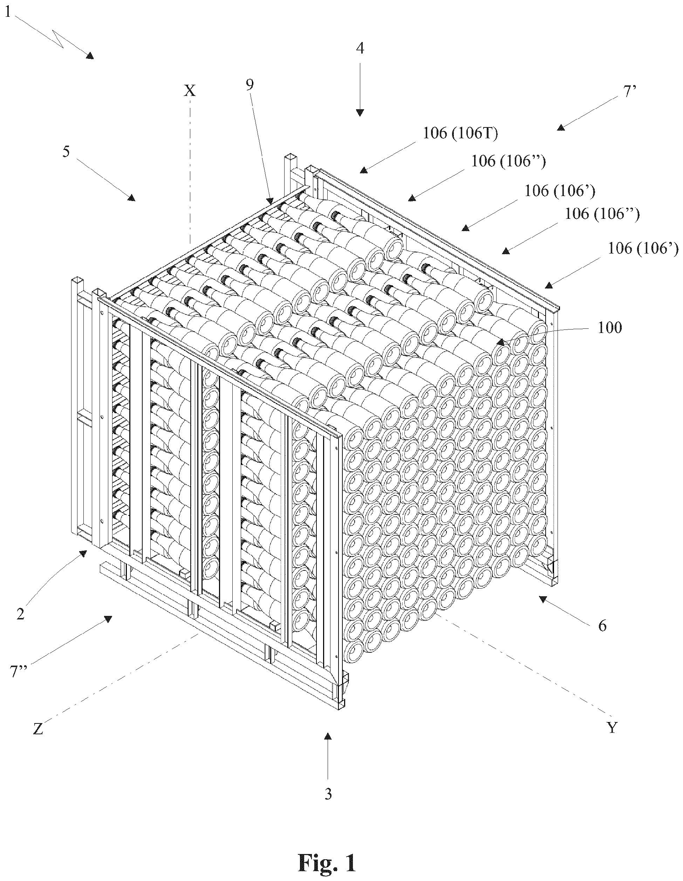

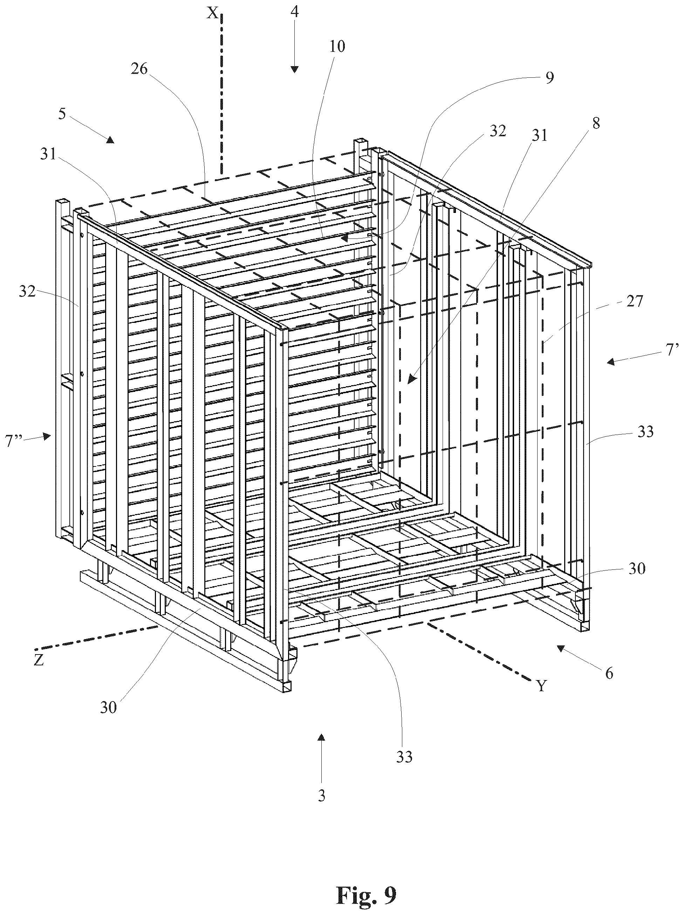

With reference for example to figures 1 and 9, the support container 1 comprises a support framework 2, with box-like shape, in particular substantially with right prism form with rectangular or square base, provided with six sides two-by-two parallel and opposite.

Advantageously, the support framework 2 is made of metal material (e.g. steel) and is preferably obtained by the joining of multiple metal sections that are fixed together.

The support framework 2 is extended mainly according to three extension directions X, Y, Z that are orthogonal to each other.

More in detail, the support framework 2 is extended, along a first extension direction X, between a base side 3 and an opposite upper side 4 that are parallel to each other.

In addition, the support framework 2 is extended, along a second extension direction Y orthogonal to said first extension direction X, between a head side 5 and an opposite bottom side 6 that are parallel and orthogonal to the base 3 and upper 4 sides.

In addition, the support framework 2 is extended, along a third extension direction Z orthogonal to the first extension direction X and to the second extension direction Y, between two opposite lateral flanks 7', 7" (including a first lateral flank 7' and a second lateral flank 7"), that are parallel and orthogonal to the base 3, upper 4, head 5 and bottom 6 sides.

In particular, in the examples reported in the enclosed figures, the support container 1 is illustrated with the base side 3 placed horizontally downward, for example abutted against the ground. Such position is that in which advantageously one or more operators load the support container 1 with the bottles 100. Of course, in particular during the remuage, the support container 1 can be positioned also with orientations that are different from that illustrated.

Preferably, in accordance with the embodiment illustrated in the enclosed figures, the support framework 2 comprises, on each lateral flank 7', 7", a first and a second longitudinal member 30, 31 which are parallel to the second extension direction Y and delimit the extension of the corresponding lateral flank 7', 7" along the first extension direction X. In particular, the first longitudinal members 30 are placed on the base side 3, delimiting the extension of the latter along the third extension direction Z, and the second longitudinal members 31 are placed on the upper side 4, delimiting the extension of the latter along the third extension direction Z.

The first and the second longitudinal member 30, 31 of each lateral flank 7', 7" are preferably connected to each other by a first and a second crosspiece 32, 33, respectively placed on the head side 5 and on the bottom side 6 of the support framework 2. In particular, in this manner the first crosspieces 32 delimit the extension of the head side 5 along the third extension direction Z and the second crosspieces 33 delimit the extension of the bottom side 6 along the third extension direction Z.

The base side 3, the upper side 4, the head side 5, the bottom side 6 and the lateral flanks 7', 7" of the support framework 2 together delimit a containment volume 8 adapted to contain multiple bottles 100.

In particular, each bottle 100 is placed with its main axis AP parallel to the second extension direction Y of the support framework 2 and positioned with its head 103 directed towards the head side 5 of the support framework 2 itself.

The bottles 100 are organized in multiple rows 104 of bottles 100, and each of such rows 104 is composed of multiple bottles 100 side-by-side along the third extension direction Z of the support framework 2, and in multiple stacks 105 of bottles 100, and each of such stacks 105 is composed of multiple bottles 100 side-by-side along the first extension direction X of the support framework 2. The bottles 100 thus organized form multiple ranks 106, each comprising multiple rows 104 (of bottles 100) placed side-by-side according to the first extension direction X and multiple stacks 105 (of bottles 100) placed side-by-side according to the third extension direction Z, as illustrated for example in figure 10.

Each rank 106 comprises a base row 104' which is composed of bottles 100 placed in abutment against the base side 3 of the support framework 2, and two lateral stacks 105', each of which composed of bottles 100 placed in abutment against the corresponding lateral flank 7', 7" of the support framework 2.

The ranks 106 of bottles 100 are placed one after the other along the second extension direction Y of the support framework 2. In particular, the bottles 100 of each rank 106 are axially offset with respect to the bottles of the subsequent rank 106, in a manner such that the enlarged body 101 of the bottles 100 of each rank 106 is partially side-by-side the neck 102 of the bottles 100 of the subsequent rank 106. In particular, each bottle 100 is placed with its main axis AP in substantially intermediate position between the main axes AP of two bottles 100 of the subsequent rank 106. More in detail, the ranks 106 comprise first ranks 106', and second ranks 106" which are placed alternated with the first ranks 106' along the second extension direction Y.

The bottles 100 of each second rank 106" are placed axially offset with respect to the bottles 100 of the adjacent first rank 106', i.e. the main axes of the bottles 100 of the second rank 106" are non-aligned with respect to the main axes AP of the bottles 100 of the adjacent first rank 106'. In particular, the main axis of each bottle 100 of one of the second ranks 106" is placed substantially in intermediate position between the two main axes AP of two bottles 100 of the adj acent first rank 106'.

In this manner, the enlarged body 101 of the bottles 100 of the second rank 106" can be positioned partially side-by-side the neck 102 of the bottles 100 of the adjacent first rank 106'.

In particular, the enlarged body 101 of each bottle 100 of the second rank 106" is partially placed in the space between the necks 102 of two bottles 100 of the adj acent first rank 106'. Analogously, the enlarged body 101 of each bottle 100 of the first rank 106' is partially placed in the space between the necks 102 of two bottles 100 of the adjacent second rank 106".

Advantageously, each bottle 100 of each first rank 106' has the main axis AP aligned with the main axis of a corresponding bottle 100 of each other first rank 106'. Analogously, each bottle 100 of each second rank 106" has the main axis AP aligned with the main axis of a corresponding bottle 100 of each other second rank 106".

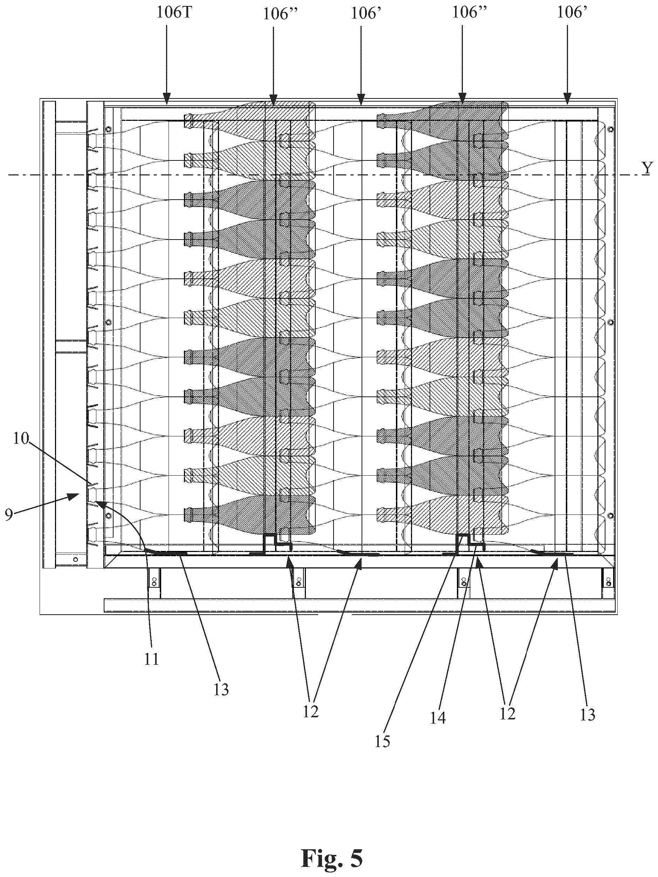

As is visible for example in figures 5 and 9, the support framework 2 comprises a series of positioning guides 9, placed on the head side 5 of the support framework 2 itself (as an at least partial closure of such head side 5) and directed towards the containment volume 8 in order to receive the heads 103 of the necks 102 of the bottles 100 of a head rank 106T of bottles 100 adjacent to the head side 5. In the example of the enclosed figures, such head rank 106T corresponds to one of the first ranks 106'.

More in detail, the aforesaid positioning guides 9 are each extended parallel to the third extension direction Z of the support framework 2 along the head side 5 of the latter and are placed in succession one next to the other along the first extension direction X of the support framework 2 itself, preferably spaced from each other.

Each positioning guide 9 is adapted to receive the heads 103 of the necks 102 of the bottles 100 of a corresponding row 104 of bottles 100 of the aforesaid head rank 106T.

Advantageously, each positioning guide 9 comprises an elongated section 10 extended along the third extension direction Z and provided with an elongated cavity 11 directed towards the containment volume 8 in order to receive the heads 103 of the bottles 100 of the corresponding row 104.

Preferably, the aforesaid elongated sections 10 connect together the first crosspieces 32 of the support framework 2, fixing them to each other.

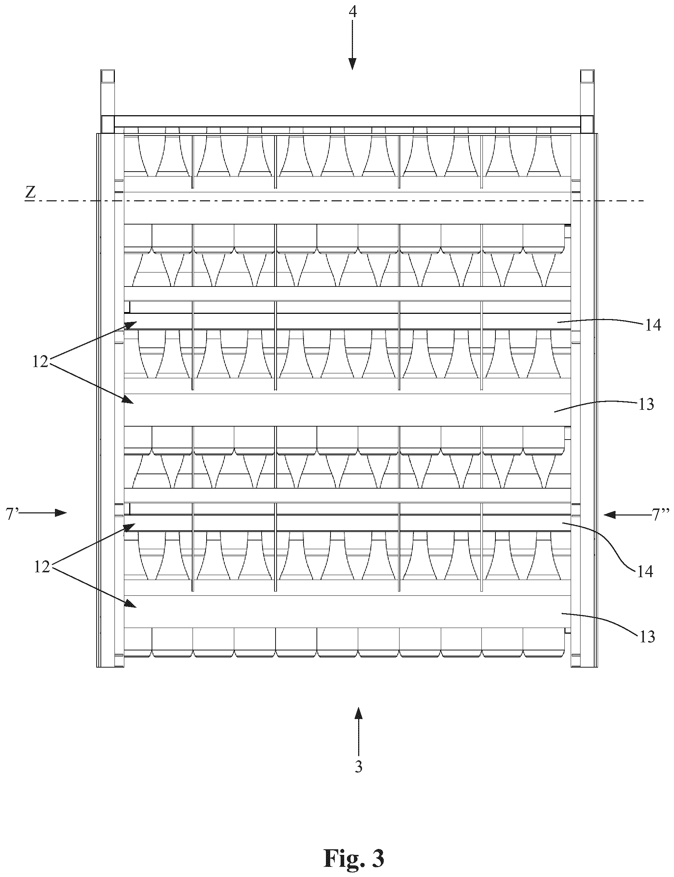

In accordance with the idea underlying the present invention, the support framework 2 comprises multiple first groups 12 of base supports 13, 14 (shown for example in figures 3 and 5), and such first groups 12 are placed on the base side 3 of the support framework 2 in succession along the second extension direction Y of the latter and are each adapted to support the base row 104' of bottles 100 of the corresponding rank 106. In particular, with reference to the example of the enclosed figures, each first group 12 is adapted to support the base row 104' of a corresponding rank of the first ranks 106'.

In detail, each first group 12 comprises a first base support 13, which is extended along the third extension direction Z of the support framework 2 and is adapted to receive, in abutment, the enlarged body 101 of the bottles 100 of the base row 104' of the corresponding rank 106 (in particular of the corresponding first rank 106').

Preferably, the first base support 13 comprises a first upper face 13F, which is directed towards the upper side 4 of the support framework 2 (in particular it is parallel to the second and third extension direction Y, Z) and is adapted to abuttingly receive the enlarged bodies 101 (and in particular their lateral surface) of the bottles 100 of the base row 104' of the corresponding rank 106.

Each first group 12 also comprises a second base support 14, which is extended along the third extension direction Z parallel to the first base support 13.

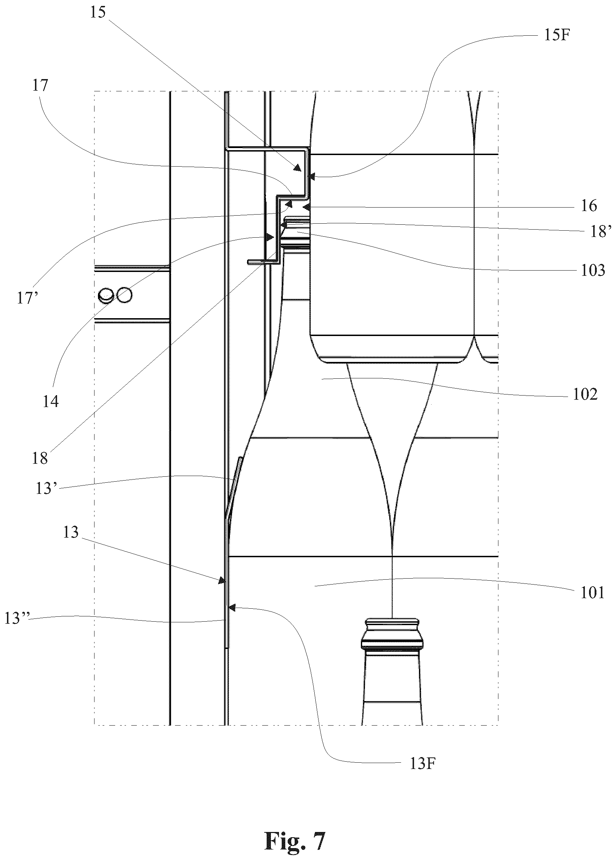

As is visible also in the detail of figure 7, such second base support 14 is placed spaced from the first base support 13 in position closer to the head side 5 of the support framework 2 with respect to the first base support 13, is projectingly extended, along the first extension direction X, into the containment volume 8 in a manner more pronounced with respect to the first base support 13 and is adapted to receive, in abutment, the neck 102 of the bottles 100 of the base row 104' of the corresponding rank 106 (in particular of the corresponding first rank 106').

Preferably, the second base support 14 comprises a second upper face 18', which is directed towards the upper side 4 of the support framework 2 (in particular it is parallel to the second and third extension direction Y, Z) and is adapted to abuttingly receive the necks 102 (and preferably the heads 103 of the latter) of the bottles 100 of the base row 104' of the corresponding rank 106. In addition, the support framework 2 comprises, for each first group 12, a third base support 15, which is placed on the base side 3 of the support framework 2 and is extended along the third extension direction Z of the latter parallel to the primo and to the second base support 13, 14.

In addition, the third base support 15 is projectingly extended in the containment volume 8 in a manner more pronounced with respect to the second base support 14 and is adapted to receive, in abutment, the enlarged body 101 of bottles 100 of a base row 104' of the corresponding rank 106 which follows the rank 106 adapted to be supported by the corresponding first group 12.

Preferably, the third base support 15 comprises a third upper face 15F, which is directed towards the upper side 4 of the support framework 2 (in particular it is parallel to the second and third extension direction Y, Z) and is adapted to abuttingly receive the enlarged bodies 101 (and in particular their lateral surface) of the bottles 100 of the corresponding base row 104'.

In particular, the third base support 15 is adapted to receive, in abutment, the enlarged body 101 of bottles 100 of a base row 104' of the second rank 106" which is adjacent to the first rank 106' whose base row 104' is supported by the corresponding first group 12 of base supports 13, 14.

In particular, the neck 102 of the bottles 100 of the base row 104' of the second ranks 106" is in abutment against the enlarged body 102 of the bottles 100 of the base row 104' of the adj acent first rank 106'.

In substance, the second base support 14 is projectingly extended dal base side 3 within the containment volume 8 for a greater height with respect to the first base support 13, and the third base support 15 is projectingly extended from the base side 3 within the containment volume 8 for a greater height with respect to the second base support 14.

In this manner, the base rows 104' of the first ranks 106' of bottles 100 are maintained stably in position by the first and by the second base support 13, 14 of the corresponding first groups 12, and the base rows 104' of the second ranks 106" are maintained stably in position by means of the third base supports 15. In particular, the enlarged body 101 of such bottles of the second ranks 106" is stably abutted against the third base support 15 and the neck of such bottles 100 is abutted against the enlarged bodies 101 of the bottles 100 of the base row 104' of the adjacent first rank 106', and such bottles 100 of the latter are in turn stably abutted against the corresponding first and second base supports 13, 14 (as described above).

In particular, the arrangement of the more greatly projecting second base support 14 of the corresponding first base support 13 allows compensating for the difference of width of the neck 102 with respect to the enlarged body 101 of the bottles 100, such that such bottles 100 rest on at least two abutment points (the first and the second base support 13, 14) which maintain them with their parallel main axis AP at the base side 3 of the support framework 2.

In addition, the arrangement of the more greatly projecting third base support 15 of the corresponding second base support 14 ensures that the bottles 100 of the second ranks 106" are maintained with their main axis AP more spaced from the base side 3 with respect to the main axes AP of the bottles 100 of the first ranks 106', such that the neck 102 of the bottle 100 of the second rank 106" can be abutted against the enlarged bodies 101 of the bottles 100 of the adjacent first rank 106'.

Advantageously, in each first group 12, the second base support 14 is placed, along the second extension direction Y, between the first base support 13 and the corresponding third base support 15.

Preferably, the second base support 14 is arranged for receiving, in abutment, the head 103 of the neck 102 of the bottles, such portion of the neck 102 is generally in a position (with respect to the main axis of the bottle 100) that is pre-established and generally standardized with respect to the enlarged body 101. In accordance with different non-illustrated embodiments of the invention, the second base support 14 is arranged for receiving, in abutment, a point of the neck 102 different from the head 103 of the latter.

Advantageously, the base supports 13, 14, 15 are extended with elongated form between the two lateral flanks 7', 7" of the support framework 2. Preferably, such base supports 13, 14, 15 have the ends fixed to the corresponding first longitudinal members 30 of the support framework 2, rigidly connecting together the first longitudinal members 30 themselves.

In accordance with the embodiment illustrated in the enclosed figures, each base support 13, 14, 15 is continuously extended (e.g. in elongated section form) from the first lateral flank 7' to the second lateral flank 7" of the support framework 2. In accordance with a different embodiment, each base support 13, 14, 15 is attained with separate elements aligned along the third extension direction Z (also spaced, one from the next) and each for example adapted to receive a corresponding bottle 100.

Advantageously, as illustrated for example in figure 7, each first group 12 comprises a first alignment seat 16, which is extended along the third extension direction Z of the support framework 2, is spaced (along the second extension direction Y) from the first base support 13 and is closer, with respect to the latter, to the head side 5 of the support framework 2 itself.

Such first alignment seat 16 is arranged for receiving the heads 103 of the necks 102 of the bottles 100 of the base row 104' of the corresponding rank 106, and in particular of the corresponding first rank 106'.

Such first alignment seat 16 defines, in particular, a reference for the positioning of the heads 103 of the bottles of the base row 104' of the corresponding first rank 106' and, therefore, of the bottle 100 itself. This allows easily placing the base rows 104' of the first ranks 106' at the correct distance from each other, in a manner such that the bottles of the base rows 104' of the second ranks 106" can be placed correctly (in predefined position) between the first ranks 106'.

Advantageously, as is visible for example in figure 7, the first alignment seat 16 is provided with at least one first reference wall 17 projectingly extended (along the first extension direction X) into the containment volume 8 in particular parallel to the third extension direction Z. Such first reference wall 17 is provided with a first front face 17' which is directed towards the bottom side 6 of the support framework 2. In this manner, the aforesaid first front face 17' is adapted to receive, across therefrom (possibly in abutment), the head 103 of the neck 102 of the bottles 100 of the base row 104' of the corresponding first rank 106'. It is thus particularly easy to position the head 103 of the bottles 100 within the first alignment seat 16.

Advantageously, in accordance with the embodiment illustrated in the enclosed figures, the aforesaid first alignment seat 16 is defined by the second base support 14 and by the third base support 15.

In particular, the third base support 15 defines the aforesaid first reference wall 17 and, preferably, the second base support 14 defines a first abutment wall 18 of the first alignment seat 16.

Such first abutment wall 18 comprises the aforesaid second upper face 18' of the second base support 14, which is directed towards the upper side 4 of the support framework 2 and is in particular substantially orthogonal to the first reference wall 17. Such second upper face 18' is preferably adapted to abuttingly receive the heads 103 of the bottles 100.

Advantageously, the third base support 15 is projectingly extended from the second base support 14 towards the containment volume 8 and delimits, with such second base support 14, the first alignment seat 16 shaped as a step, which preferably is open towards the upper side 4 and the bottom side 6 of the support framework 2. In particular, the first reference wall 17 and the first abutment wall 18 of the first alignment seat 16 are joined together at an angle, forming a substantially right angle of the first alignment seat 16 itself.

In accordance with the embodiment illustrated in the enclosed figures, the second and the third base support 14, 15 are attained by means of a same profile (in particular metallic) with suitably shaped cross section.

In accordance with the embodiment illustrated in the enclosed figures, the bottles 100 of the base row 104' of the head rank 106T come to abut, with their enlarged body 101, against a corresponding first base support 13, and with their neck 102 (and in particular the head 103) against the corresponding positioning guide 9.

Advantageously, with reference for example to figure 7, each first base support 13 is provided with a flat portion 13' (substantially parallel to the base side 3) which is adapted to abuttingly receive a portion with constant section of the enlarged body 101 of the bottle, and a tilted portion 13", which is extended from the flat portion 13' bent towards the interior of the containment volume 8 and adapted to abuttingly receive a tapered portion of the enlarged body 101 which connects the latter to the neck 102 of the bottle 100.

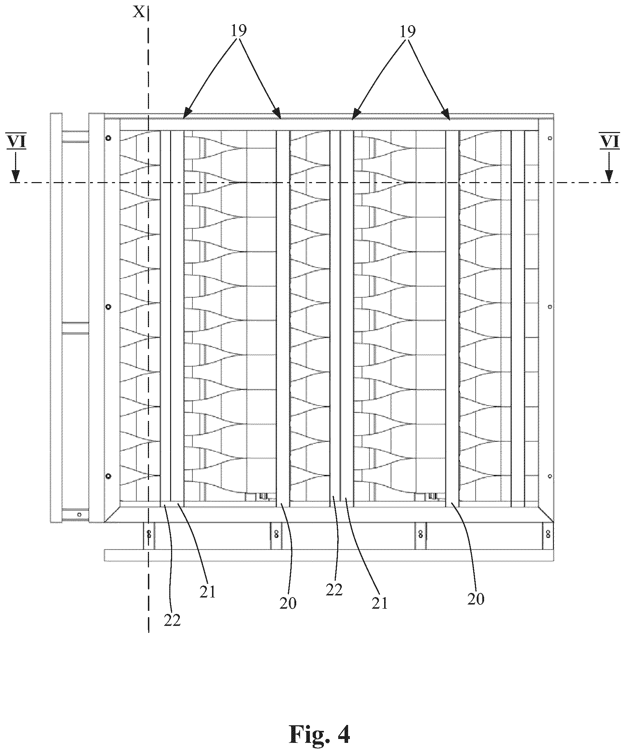

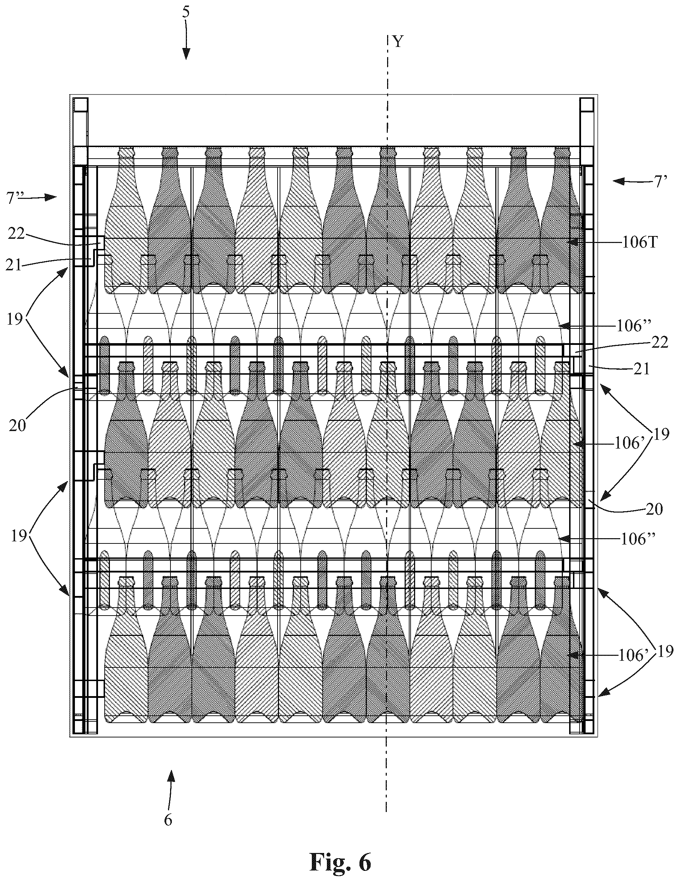

Advantageously, the support framework 2 comprises, on each lateral flank 7', 7", multiple second groups 19 of lateral supports 20, 21, visible for example in figures 1, 4 and 6. Such second groups 19 are placed in succession along the second extension direction Y and each said second group being adapted to receive in abutment the bottles 100 of the corresponding of the lateral stack 105' of the corresponding rank 106.

Each second group 19 comprises a first lateral support 20, which is extended along the first extension direction X of the support framework 2 and is adapted to receive in abutment the enlarged body 101 of the bottles 100 of the corresponding lateral stack 105'.

Advantageously, the first lateral support 20 comprises a first abutment face 20F, which is directed towards the lateral flank 7', 7" opposite that on which the corresponding second group 19 is placed, preferably it is parallel to the first and second extension direction X, Y, and is adapted to receive in abutment the enlarged bodies 101 (and in particular their lateral surface) of the bottles 100 of the lateral stack 105' of the corresponding rank 106.

In addition, each second group 19 comprises a second lateral support 21, which is extended along the first extension direction X, is placed spaced from the first lateral support 20 in a position closer to the head side 5 of the support framework with respect to the first lateral support 20. Such second lateral support 21 is projectingly extended (along the third extension direction Z) into the containment volume 8 in a manner more pronounced with respect to the first lateral support 20 and is adapted to receive in abutment the neck 102 of the bottles 100 of the corresponding lateral stack 105'.

Advantageously, the second lateral support 21 comprises a second abutment face 25', which is directed towards the lateral flank 7', 7" opposite that on which the corresponding second group 19 is placed, preferably is parallel to the first and second extension directions X, Y, and is adapted to receive in abutment the necks 102 (and preferably the heads 103 of the latter) of the bottles 100 of the lateral stack 105' of the corresponding rank 106.

In addition, the support framework 2 comprises, for each second group 19, a third lateral support 22, which is placed on the corresponding lateral flank 7', 7", is extended along the first extension direction X and is projectingly extended (along the third extension direction Z) into the containment volume 8 in a manner more pronounced with respect to the second lateral support 21 and is adapted to receive in abutment the enlarged body 101 of bottles 100 of a lateral stack 105' of bottles of a corresponding rank 106 subsequent to the rank 106 adapted to abut against the corresponding second group 19.

Advantageously, the third lateral support 22 comprises a third abutment face 22F, which is directed towards the lateral flank 7', 7" opposite that on which the corresponding second group 19 is placed, preferably it is parallel to the first and second extension directions X, Y, and is adapted to receive, in abutment, the enlarged bodies 101 (and in particular their lateral surface) of the bottles 100 of the corresponding lateral stack 105'.

In particular, the first and the second lateral support 20, 21 are adapted to receive in abutment, respectively, the enlarged body 101 and the neck 102, of the bottles 100 of the lateral stack 105' of a corresponding first rank 106', and the third lateral support 22 is adapted to receive in abutment the enlarged body 101 of the bottles 100 of the lateral stack 105' of the adjacent second rank 106"; or vice versa.

For example, with reference to the examples of the enclosed figures, on the first lateral flank 7' of the support framework 2, the first and the second lateral support 20, 21 are adapted to receive in abutment, respectively, the enlarged body 101 and the neck 102 of the bottles 100 of the lateral stack 105' of a corresponding first rank 106', and the third lateral support 22 is adapted to receive, in abutment, the enlarged body 101 of the bottles 100 of the lateral stack 105' of the adjacent second rank 106". Preferably, on the second lateral flank 7" of the support framework 2, the first and the second lateral support 20, 21 are adapted to receive in abutment, respectively, the enlarged body 101 and the neck 102 of the bottles 100 of the lateral stack 105' of a corresponding second rank 106", and the third lateral support 22 is adapted to receive in abutment the enlarged body 101 of the bottles 100 of the lateral stack 105' of the adjacent first rank 106'.

In substance, the second lateral support 21 is projectingly extended from the corresponding lateral flank 7', 7" within the containment volume 8 for a greater height with respect to the first lateral support 20, and the third lateral support 22 is projectingly extended from the corresponding lateral flank 7', 7" within the containment volume 8 for a greater height with respect to the second lateral support 21.

In this manner, considering the example in the enclosed figures, on the first lateral flank 7' of the support framework 2, the lateral stacks 105' of the first ranks 106' of bottles 100 are maintained stably in position by the abutment against the first and second lateral support 20, 21 of the corresponding second groups 19, and the lateral stacks 105' of the second ranks 106" are maintained stably in position by means of the third lateral supports 22. In particular, the enlarged body 101 of such bottles of the second ranks 106" is stably in abutment against the third lateral support 22 and the neck 102 of such bottles 100 is in abutment against the enlarged bodies 101 of the bottles 100 of the lateral stack 105' of the adjacent first rank 106', and such bottles 100 of the latter are in turn stably in abutment against the corresponding first and second lateral supports 20, 21 (as described above).

In particular, the arrangement of the more greatly projecting second lateral support 21 of the corresponding first lateral support 20 allows compensating for the difference of width of the neck 102 with respect to the enlarged body 101 of the bottles 100, such that such bottles 100 come to laterally abut against at least two abutment points (the first and the second lateral support 20, 21) which maintain them with their main axis parallel to the lateral flanks 7', 7" of the support framework 2.

In addition, the arrangement of the more greatly projecting third lateral support 22 of the corresponding second lateral support 21 ensures that the bottle 100 of the second rank 106" is maintained with its main axis AP more spaced from the first lateral flank 7' with respect to the main axes AP of the bottles 100 of the first ranks 106', such that the neck 102 of the bottle 100 of the second rank 106" can be abutted against the enlarged bodies 101 of the bottles 100 of the adjacent first rank 106'.

An analogous consideration is applicable to the second lateral flank 7", in which the first and the second lateral support 20, 21 act on the lateral stacks 105' of the second ranks 106" and the third lateral supports 22 act on the lateral stacks 105 of the first ranks 106'.

Advantageously, in each second group 19, the second lateral support 21 is placed, along the second extension direction Y, between the first lateral support 20 and the corresponding third lateral support 22.

Preferably, the second lateral support 21 is arranged for abuttingly receiving the head 103 of the neck 102 of the bottles 100. In accordance with different non-illustrated embodiments of the invention, the second lateral support 21 is arranged for receiving, in abutment, a point of the neck 102 different from the head 103 of the latter.

Advantageously, the lateral supports 20, 21, 22 are extended with elongated form between the base side 3 and the upper side 4 of the support framework 2. Preferably, such lateral supports 20, 21, 22 have the ends fixed to the first and second longitudinal members 30, 31 of the corresponding lateral flank 7', 7" of the support framework 2.

In accordance with the embodiment illustrated in the enclosed figures, each lateral support 20, 21, 22 is extended continuously (for example in elongated section form) from the base side 3 to the upper side 4 of the support framework 2. In accordance with a different embodiment, each lateral support 20, 21, 22 is attained with separate elements aligned along the first extension direction X (also spaced, one from the next) and each for example adapted to receive a corresponding bottle 100.

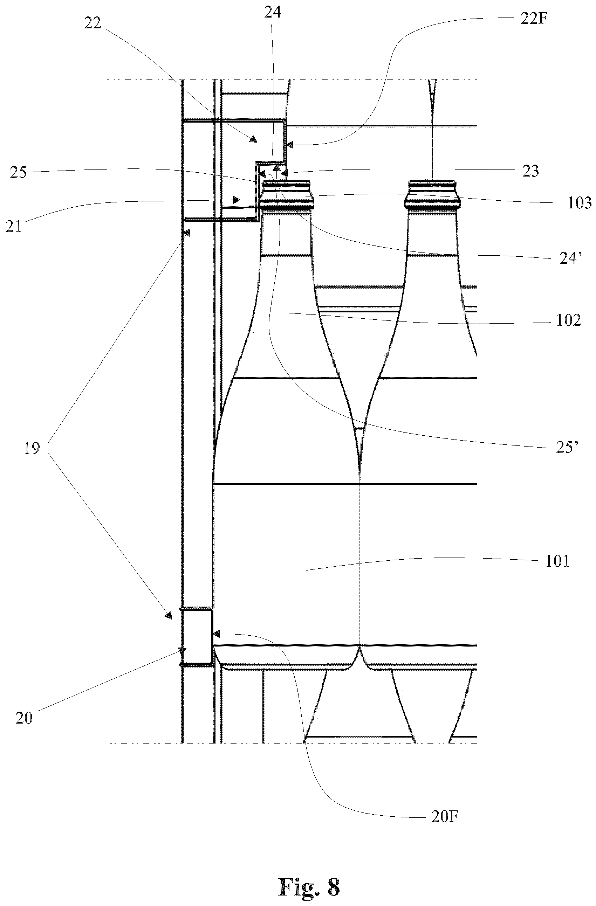

Advantageously, with reference for example to figure 8, each second group 19 comprises a second alignment seat 23, which is extended along the first extension direction X of the support framework 2, is spaced (along the second extension direction Y) from the first lateral support 20 and is closer, with respect to the latter, to the head side 5 of the support framework 2.

Such second alignment seat 23 is arranged for receiving the heads 103 of the bottles 100 of the corresponding lateral stack 105'.

In particular, analogous to the first alignment seat 16, the second alignment seat 23 defines a reference for the positioning of the heads 103 of the bottles 100 of the lateral stack 105' of the corresponding rank 106 and, hence, of the bottles 100 themselves. For example, on the first lateral flank 7', this allows easily placing the lateral stacks 105' of the first rank 106' at the correct distance from each other, in a manner such that the bottles 100 of the base rows 104' of the second ranks 106" can be correctly placed (in predefined position) between the first ranks 106'.

Advantageously, the second alignment seat 23 is provided with a second reference wall 24 more greatly extended (along the third extension direction Z) into the containment volume 8 and provided with a second front face 24' directed towards the bottom side 6 of the support framework 2. Such second front face 24' is adapted to receive, across therefrom, the head 103 of the bottles 100 of the corresponding lateral stack 105' of the corresponding rank 106. It is thus particularly easy to position the head 103 of the bottles 100 within the second alignment seat 23.

Advantageously, in accordance with the embodiment illustrated in the enclosed figures, the aforesaid second alignment seat 23 is defined by the second lateral support 21 and by the third lateral support 22.

In particular, the third lateral support 22 defines the aforesaid second reference wall 24 and, preferably, the second lateral support 21 defines a second abutment wall 25 of the second alignment seat 23, in particular substantially orthogonal to the second reference wall 24. Advantageously, such second abutment wall 25 comprises the aforesaid second upper face 25' of the second lateral support 21, which is directed towards the opposite lateral flank 7', 7" of the support framework 2. The second upper face 25' is preferably adapted to receive in abutment the head 103 of the neck 102 of the bottles 100.

Advantageously, the third lateral support 22 is projectingly extended from the second lateral support 21 towards the containment volume 8 and delimits, with such second lateral support, the step-shaped second alignment seat 23, which is open towards the opposite lateral flank 7', 7" and the bottom side 6 of the support framework 2. In particular, the second reference wall 24 and the second abutment wall 25 of the second alignment seat 23 are joined to each other at angle, forming a substantially right angle of the second alignment seat 23 itself.

In accordance with the embodiment illustrated in the enclosed figures, the second and the third lateral support 21, 22 are attained by means of a same profile (in particular metallic) with suitably shaped transverse section.

Advantageously, the support framework comprises a rear wall 27 (for example in metal net or grid form) placed to close the bottom side 6 of the support framework 2 itself.

In addition, preferably, the support framework 2 comprises an upper wall 26 (for example in metal net or grid form) placed to close the upper side 4 of the support framework 2 itself.

Such rear and lower walls 27, 26 (schematically illustrated with dashed line in figure 9) allow completely closing (together with the positioning guides 9 and the first and second groups 12, 19) the containment volume 8 of the support container 1, such that the bottles 100 cannot exit outward from the containment volume 8 during the movement of the support container 1 and the different operations of the remuage.

Preferably, the rear and lower walls 27, 26 are removably fixed, respectively to the bottom side 6 and upper side 4, in a manner such that in particular they can be removed in order to execute the loading and unloading operations of the bottles 100.

In particular, the rear wall 27 is fixed to the second crosspieces 33 and the upper wall 26 is fixed to the first longitudinal members 31, by means of removable mechanical couplers (in a per se conventional manner).

The invention thus conceived therefore attains the pre-established objects.

## Claims

1. Support container (1) for bottles, in particular for the remuage of sparkling wines, said support container (1) comprising:
a support framework (2) with box-like shape, which is extended:
- along a first extension direction (X), between a base side (3) and an opposite upper side (4);
- along a second extension direction (Y) orthogonal to said first extension direction (X), between a head side (5) and an opposite bottom side (6);
- along a third extension direction (Z) orthogonal to said first extension direction (X) and to said second extension direction (Y), between two opposite lateral flanks (7', 7");
wherein said base side (3), upper side (4), head side (5), bottom side (6) and lateral flanks (7', 7") between them delimit a containment volume (8) adapted to contain multiple bottles (100) organized in multiple rows (104), each comprising multiple said bottles (100) side-by-side along said third extension direction (Z), and in multiple stacks (105), each comprising multiple said bottles (100) side-by-side along said first extension direction (X);
wherein each of said bottles (100) comprises an enlarged body (101) and a narrowed neck (102) extended from the enlarged body (101) up to a head (103) of said neck (102);
wherein said bottles (100) form multiple ranks (106), each comprising multiple said rows (104) placed side-by-side according to said first extension direction (X) and multiple said stacks (105) placed side-by-side according to said third extension direction (Z);
wherein each said rank (106) comprises a base row (104') of bottles (100) adapted to be placed in abutment against said base side (3), and two lateral stacks (105'), each of which is composed of bottles (100) adapted to be placed on the corresponding said lateral flank (7', 7"); wherein said ranks (106) are placed in succession along said second extension direction (Y), with the enlarged bodies (101) of the bottles (100) of each said rank (106) partially side-by-side the necks (102) of the bottles (100) of the subsequent rank (106);
said support container (1) being **characterized in that** said support framework (2) comprises multiple first groups (12) of base supports (13, 14), which first groups (12) are placed on said base side (3) in succession along said second extension direction (Y) and are each adapted to support the base row (104') of a corresponding said rank (106);
wherein each said first group (12) comprises:
- a first base support (13), which is extended along said third extension direction (Z) and is adapted to receive, in abutment, the enlarged body (101) of the bottles (100) of the base row (104') of the corresponding said rank (106);
- a second base support (14), which is extended along said third extension direction (Z), is placed spaced from said first base support (13) in a position closer to said head side (5) with respect to said first base support (13), is projectingly extended, along said first extension direction (X), into said containment volume (8) in a manner more pronounced with respect to said first base support (13) and is adapted to receive in abutment the neck (102) of the bottles (100) of the base row (104') of the corresponding said rank (106);
wherein said support framework (2) comprises, for each said first group (12), a third base support (15), which is arranged on said base side (3), is extended along said third extension direction (Z), is projectingly extended, along said first extension direction (X), into said containment volume (8) in a manner more pronounced with respect to said second base support (14), and is adapted to receive in abutment the enlarged body (101) of bottles (100) of the base row (104') of a corresponding said rank (106) following the rank (106) adapted to be supported by the corresponding said first group (12).

2. Support container (1) according to claim 1, **characterized in that** each said first group (12) comprises a first alignment seat (16), which is extended along said third extension direction (Z), is spaced from said first base support (13), is closer to said head side (5) with respect to said first base support (13) and is arranged for receiving the heads (103) of the bottles (100) of the base row (104') of the corresponding said rank (106).

3. Support container (1) according to claim 2, **characterized in that** said first alignment seat (16) is provided with at least one first reference wall (17) projectingly extended, along said first extension direction (X), into said containment volume (8) and provided with a first front face (17') directed towards said bottom side (6) in order to receive, across from said front face (17'), the head (103) of the necks (102) of the bottles (100) of the base row (104') of the corresponding said rank (106).

4. Support container (1) according to claim 3, **characterized in that** said first alignment seat (16) is defined by said second base support (14) and by said third base support (15); wherein said third base support (15) defines said first reference wall (17).

5. Support container (1) according to any one of the preceding claims, **characterized in that**, in each said first group (12), said second base support (14) is placed, along said second extension direction (Y), between said first base support (13) and said third base support (15).

6. Support container (1) according to any one of the preceding claims, **characterized in that** said support framework (2) comprises, on each said lateral flank (7', 7"), multiple second groups (19) of lateral supports (20, 21), said second groups (19) being placed in succession along said second extension direction (Y) and each said second group (19) being adapted to receive in abutment the bottles (100) of the corresponding said lateral stack (105') of a corresponding said rank (106);
wherein each said second group (19) comprises:
- a first lateral support (20), which is extended along said first extension direction (X) and is adapted to receive in abutment the enlarged body (101) of the bottles (100) of the corresponding lateral stack (105') of the corresponding rank (106);
- a second lateral support (21), which is extended along said first extension direction (X), is placed spaced from said first lateral support (20) in a position closer to said head side (5) with respect to said first lateral support (20), is projectingly extended, along said third extension direction (Z), into said containment volume (8) in a manner more pronounced with respect to said first lateral support (20), and is adapted to receive in abutment the neck (102) of the bottles (100) of the corresponding lateral stack (105') of the corresponding first rank (106);
wherein said support framework (2) comprises, for each said second group (19), a third lateral support (22), which is placed on the corresponding said lateral flank (7', 7"), is extended along said first extension direction (X), is projectingly extended, along said third extension direction (Z), into said containment volume (8) in a manner more pronounced with respect to said second lateral support (21), and is adapted to receive in abutment the enlarged body (101) of bottles (100) of a corresponding said rank (106) following the rank (106) adapted to abut against the corresponding said second group (19).

7. Support container (1) according to claim 6, **characterized in that** each said second group (19) comprises a second alignment seat (23), which is extended along said first extension direction (X), is spaced from said first lateral support (20), is closer to said head side (5) with respect to said first lateral support (20) and is arranged for receiving the heads (103) of the bottles (100) of the corresponding lateral stack (105') of the corresponding said rank (106).

8. Support container (1) according to claim 7, **characterized in that** said second alignment seat (23) is provided with at least one second reference wall (24) projectingly extended, along said third extension direction (Z), into said containment volume (8) and provided with a second front face (24') directed towards said bottom side (6) in order to receive, across from said second front face (24'), the head (103) of the bottles (100) of the corresponding lateral stack (105') of the corresponding said rank (106).

9. Support container (1) according to claim 8, **characterized in that** said second alignment seat (23) is defined by said second lateral support (21) and by said third lateral support (22); wherein said third lateral support (22) defines said second reference wall (24).

10. Support container (1) according to any one of the preceding claims from 6 to 9, **characterized in that**, in each said second group (19), said second lateral support (21) is placed, along said second extension direction (Y), between said first lateral support (20) and said third lateral support (22).
